# EUROPEAN PATENT APPLICATION

(11) **EP 1 148 687 A1**
(43) Date of publication of application: **24.10.2001**
(21) Application number: 00108037.3
(22) Date of filing: 20.04.2000
(51) Int. Cl.: H04L 29/06

(54) **Communication device**

(71) Applicant: Telefonaktiebolaget L M Ericsson (Publ), 126 25 Stockholm (SE)
(72) Inventor: Hameleers, Heino, 6471 VN Kerkrade (NL); Hundscheidt, Frank, 6463 BK Kerkrade (NL)
(74) Representative: HOFFMANN - EITLE

(57) **Abstract**

A communication device and method of distributing data over a plurality of channels is described, where a first protocol implementation (11) provided at a first layer (1) has a plurality of media data streams (12, 13, 14), each media stream being associated with a type of media, and passes the streams to a lower layer (2). The lower layer (2) comprises a second protocol implementation that is operable to identify the media data streams. In a third layer (3) channels (31, 32) are provided that may be associated with different qualities of service. The second protocol implementation is also operable to perform the placing of a given media stream into a given channel on the basis of the type of media in the given media stream and the quality of service associated with the given channel.

## Description

### [Field of the Invention]

The present invention relates to a communication device and a method for distributing data over a plurality of channels.

### [Background of the Invention and Prior Art]

Communication devices and a protocol architecture for the sending and receiving of multi-media information are known. For example, ITU-T Recommendation H.324 (03/96) describes the protocol architecture and basic arrangement of terminals that are suitable for low bit rate multi-media communication, and ITU-T Recommendation H.323 (11/96) describes visual telephone systems and equipment for local area networks with a non-guaranteed quality of service. Both of these documents are herewith incorporated by reference.

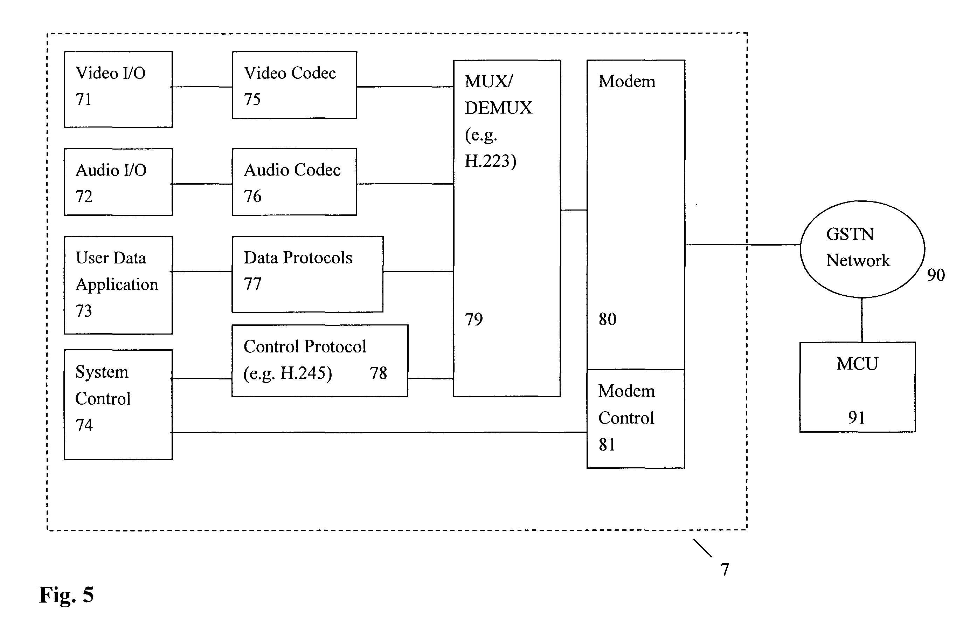

Figure 5 shows a basic arrangement of a multi-media terminal 7 as described in ITU-T Recommendation H.324. The terminal 7 is connected to a general switched telephone network (GSTN) 90 and comprises a video I/O-unit 71, an audio I/O-unit 72 and a user data application 73. In other words, the terminal 7 is capable of handling three types of media, namely video, audio and data. The corresponding data from units 71, 72 and 73 is fed to a video codec 75, an audio codec 76 and a data protocol unit 77, respectively. Then the three media streams are fed to a multiplexer/demultiplexer 79, which multiplexes the media streams into a single bit stream. This single bit stream is then passed to a modem 80, which suitably converts the bit stream for transportation over the GSTN network 90.

In the opposite direction, the multiplexer/demultiplexer 79 demultiplexes data received by the modem 80 out of network 90, and feeds the demultiplexed streams into the appropriate codecs or units, which in turn process and pass them to the appropriate I/O unit or application.

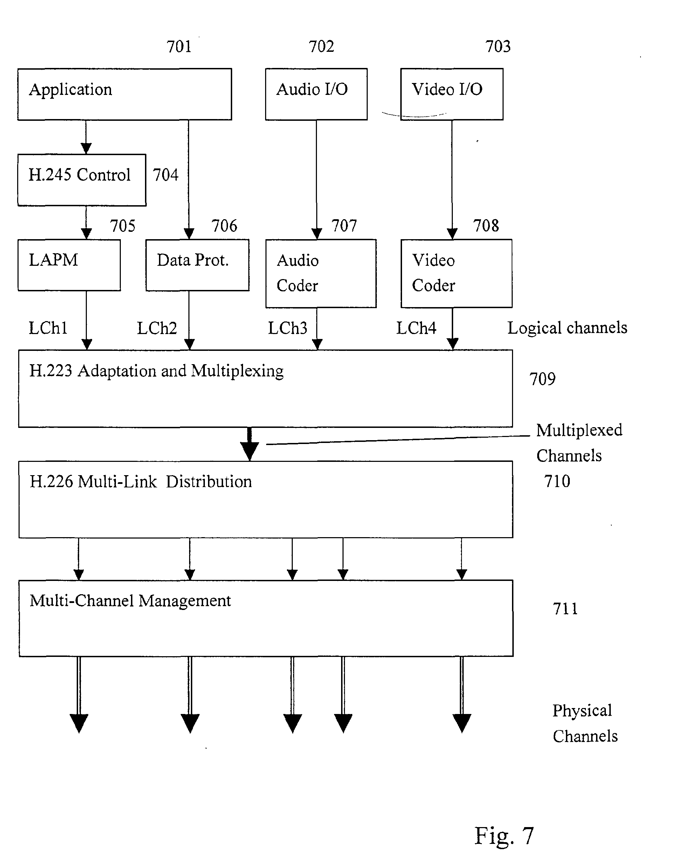

The terminal 7 is controlled by a system controller 74, where said system controller 74 provides control commands for the control protocol unit 78 and the modem control 81. The control protocol of unit 78 manages the logical channels used to transport the media streams. For example, the selected control protocol can be the one described in ITU-T Recommendation H.245 (03/96), which is herewith incorporated by reference. The multiplexing and demultiplexing in unit 79 can e.g. be done in accordance with ITU-T Recommendation H.223 (03/96), which is herewith also incorporated by reference. Some aspects of H.245 and H.223 will be explained in more detail later with reference to the example of Fig. 7.

The multipoint control unit (MCU) 91 is a part of the GSTN network 90 and serves to control multi-media sessions between a plurality of multi-media terminals 7. This is well known in the art and needs not be explained in more detail here.

On the other hand, communication networks are known, which provide the possibility of establishing multi-links between one terminal and the network. An example of such a system is the Universal Mobile Telephone Standard (UMTS). As a means for distributing data onto a varying number of channels or links, ITU-T Recommendation H.226 (09/98) describes a channel aggregation protocol for multi-link operation on circuit-switched networks, where the system in accordance with recommendation H.226 has the ability to operate with a changing number of channels with arbitrary, different, or continuously varying bit rates, as well as fixed-rate channels. H.226 has the object of finely distributing payload across different channels, simultaneously minimizing latency and overhead. ITU-T Recommendation H.226 (09/98) is herewith also incorporated by reference.

The mechanism of H.226 consists in receiving a continuous bit stream from a higher layer, dividing the bit stream into so-called samples, the size of a sample being 8 bits. The samples form a sequence that needs to be transported in order to the receiving H.226 peer. The distributing of samples over given channels (H.226 is not concerned with how channels are managed, i.e. established, maintained or removed) takes into account the different transmission rates of each channel. Channels having a high transmission rate will receive more samples than channels having a low transmission rate. In other words, the average distance of two consecutive samples with respect to their sequence numbering will be smaller on a channel having a high transmission rate than on a channel having a low transmission rate. In this way, it is assured that the skew between different channels does not exceed a specified limit.

Fig. 7 shows an example, where the above concepts are combined. Namely, an application 701 provides instructions (e.g. mode setting commands) to a control protocol implementation (e.g. H.245), and provides data information to a data protocol implementation 706. It may be noted that Fig. 7 shows a protocol hierarchy, and application 701 of Fig. 7 corresponds to elements 73 and 74 of Fig. 5, while control protocol implementation 704 corresponds to element 78, and data protocol 706 corresponds to data protocol 77. The control protocol implementation 704 provides data to an LAPM (Link Access Procedure for Modems) 705. Otherwise an audio I/O 702, video I/O 703, audio coder 707 and video coder 708 are provided, which all respectively correspond to elements 72, 71, 76, 75 of Fig. 5.

Reference numeral 709 indicates a multiplexing protocol implementation, e.g. according to H.223 (see also element 79 in Fig. 5). In the example of Fig. 7 the multiplexing layer receives four distinct logical channels LCh1 (control), LCh2 (data), LCh3 (audio) and LCh4 (video). Naturally, a larger or smaller number of logical channels is possible. H.223 is a packet-oriented multiplexing protocol that is designed to primarily provide adaptation and multiplexing. The units of information received by the adaptation function of H.223 are referred to as AL-SDUs (Adaptation Layer Service Data Unit). This nomenclature is due to the fact that H.223 is generally considered to consist of an (upper) adaptation layer (AL) and a (lower) multiplexing layer (MUX layer). The AL_SDUs contain an integer number of octets. The adaptation function of the AL consists in adding, where appropriate, additional octets for purposes such as error detection, sequence numbering, and retransmission. ITU Recommendation H.223 (03/96) mentions three different types of ALs, namely AL1, AL2 and AL3, where AL1 is designed primarily for the transfer of data or control information, AL2 is designed primarily for the transfer of digital audio, and AL3 is designed primarily for the transfer of digital video. Typically, the specific AL will be chosen by the H.245 control protocol 704 using the so-called OpenLogicalChannel message at the time a logical channel is opened (see Recommendation H.245 (03/96)). Any of the three types of AL may be used to carry a given logical channel.

The adapted data units are called MUX-SDUs, and each MUX-SDU always contains an integral number of octets that belong to a single logical channel. The MUX-SDUs are placed into so-called MUX-PDUs by the multiplexing layer. MUX-PDUs, which are output to the lower lying physical layer(s), consist of a one-octet header followed by a variable number of octets in the information field. Octets from multiple logical channels may be present in a single MUX-PDU information field. In other words, the MUX-PDUs constitute a channel onto which the logical channels LCh1, LCh2, LCh3 and LCh4 are multiplexed. The header octet contains a 4-bit Multiple Code (MC) field which specifies, by reference to a multiplex table entry, the logical channel to which each octet in the information field belongs. For example, multiplex entry 0 is permanently assigned to the control channel, and other multiplex entries are formed by the transmitter and are signaled to the far end via the control channel prior to their use. In other words, this will be arranged by the control protocol 78 (Fig. 5) under control of the system control 74.

In the example of Fig. 7 it is assumed that the MUX-PDUs output by H.223 are transported over a network that provides multi-channel capabilities, i.e. the possibility of establishing a plurality of physical channels having different characteristics, e.g. different transmission rates (The term "physical" relates to the fact that these channels are provided at the so-called physical layer, and does not mean that they must have physical substance. In other words, the "physical" channels can also be defined in logical terms, i.e. as time slots in a TDMA scheme). Reference numeral 711 in Fig. 7 indicates an implementation for managing a plurality of physical channels. The multi-call capability in UMTS is an example. Implementation 711 manages the physical channels. As a means for distributing the H.223 PDUs onto the plurality of physical channels, an H.226 implementation is provided in the example of Fig. 7. This implementation operates as explained above, i.e. divides the multiplexed stream into samples and evenly distributes the samples onto the physical channels provided by the multi-channel management implementation 711 in accordance with the transmission rate of the respective physical channels.

### [Object of the Invention]

The object of the present invention is to provide an improved communication device and an improved method of distributing data over a plurality of channels.

### [Summary of the Invention]

This object is solved by the communication device of claim 1 and the method of distributing data according to claim 11. Advantageous embodiments are described in the dependent claims.

The present invention proposes a system that transports multi-media streams, where each media stream is associated with a certain type, where a type identifies one or more kind of media contained in the stream (e.g. video, audio or data, or a mixture of these) and where the connection to a network can be achieved over a plurality of channels that may have different qualities of service. Examples of a quality of service are the presence of ARQ (Automatic Retransmission ReQuest), which ensures transmission of all frames or packets over the channel, the provision of a real-time function, which means that the channel provides a guaranteed delay, or the provision of a certain type of coding, such as enhanced speech coding using the AMR codec. In accordance with the present invention, a protocol implementation is provided at the layer for distributing data over the channels, said protocol implementation being different from the known protocol H.226 in that it is operable to identify the media streams of different media type in the data stream it receives from a higher layer, and is operable to perform the placing of a given media stream into a given channel on the basis of the type associated with the given media stream and the quality of service associated with the given channel.

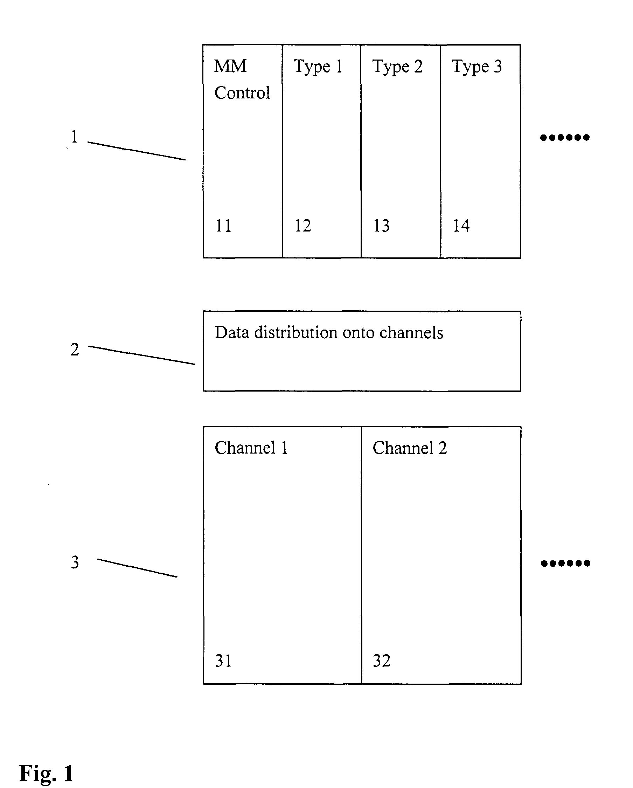

This is shown in a general way in figure 1. In figure 1 reference numeral 1 represents a first layer, in which three media streams 12, 13, 14 of different type and a multi-media control protocol 11 are present. These streams correspond to the logical channels shown in Fig. 7. The row of dots on the right side indicates that a larger number of media streams is possible, where the additional media streams could have the same type as other media streams (e.g. two or more video streams), or additional types of media could be present. It may be noted that a type can relate to a plurality of media kinds, such that one type may e.g. identify that audio and video is mixed in one stream. Reference number 2 refers to a data distribution layer, where said layer is provided lower than layer 1. Furthermore, a layer 3 is provided lower than the data distribution layer 2, where said layer 3 comprises a plurality of channels 31, 32, which may have different qualities of service. The dots at the right hand side again indicate that the two depicted channels are only an example, and a larger number of channels is possible. The transition of data from layer 1 to layer 2, and from layer 2 to layer 3 may be direct, or further layers/protocol implementations may be provided between layers 1 and 2, and between layers 2 and 3.

In accordance with the present invention, the protocol implementation at the data distribution layer 2 is capable of performing an association between the type of the media streams and the quality of service assigned to a given channel. As an example, it is possible that an audio or video stream is placed into a real-time channel, whereas a data stream is placed into an error-free channel (e.g. an ARQ channel). Or its is possible that an audio stream that forms part of a multimedia session is placed into a channel having a desired optimized coding for speech.

The concept of a layer-based protocol architecture is well known (OSI model). It means that a plurality of communication protocols are arranged in a hierarchical structure, where each layer has a specific function and may comprise one or more protocol implementations. A communication always comprises two peers of a protocol, one on the sending side, and one on the receiving side. The passing down of data from a higher layer to a lower layer on the sending side implies that the lower layer embeds the data received from the higher layer into protocol data units (PDUs) associated with a protocol of the lower layer. Embedding means that the higher layer data is encapsulated or segmented into the lower layer PDUs. On the receiving side, the opposite operation occurs, namely the data is desegmented or deencapsulated from the lower layer PDUs and passed to the higher layer peer. This is well known in the art and needs not be explained further.

Furthermore, the term "channel" is used generically in the context of the present application and shall generally refer to any logical and/or physical arrangement capable of conveying a bit stream. Therefore, the term "channel" as used in the present application also refers to bit-pipes, bearers, carriers, etc.

### [Brief Description of Figures]

The features and advantages of the present application shall become more apparent from the following detailed description, which makes reference to the figures, in which:
- Fig. 1: shows a basic protocol architecture of the present invention;
- Fig. 2: shows a more detailed protocol architecture of an embodiment of the present invention;
- Fig. 3a: shows the protocol architecture of a first preferred embodiment of the present invention;
- Fig. 3b: is an explanatory diagram of the data flow in the embodiment of Fig. 3a;
- Fig. 3c: shows the protocol architecture of a second preferred embodiment of the present invention;
- Fig. 3d: is an explanatory diagram of the data flow in the embodiment of Fig. 3c;
- Fig. 4a: shows the protocol architecture employed in two terminal devices and an interworking function in accordance with the embodiment of Figures 3a and 3b;
- Fig. 4b: shows the protocol architecture employed in two terminal devices and an interworking function in accordance with the embodiment of Figures 3c and 3d;
- Fig. 5: is a block diagram explaining a conventional multi-media terminal;
- Fig. 6: is a block diagram of a multi-media terminal in accordance with an embodiment of the present invention; and
- Fig. 7: is an explanatory diagram showing the data flow between different protocol layers when combining the concept of multimedia multiplexing with the concept of multi-link distribution over a plurality of physical channels.

### [Detailed Description of the Invention]

Figure 1 shows the basic protocol and layer architecture of the present invention. At a first layer 1, a plurality of media streams 12, 13, 14 of different type are present, as well as a stream 11 of control information provided in accordance with the multi-media control protocol. An example of such a multi-media control protocol is the protocol specified in above mentioned ITU-T Recommendation H.245. As will be seen, the control protocol to be used in the context of the present invention will preferably have supplementary features that go beyond the specification of H.245. This specific implementation according to the present invention will therefore be referred to as H.245*.Naturally, more than three media streams can be present, and more than three different types of media. It is equally well possible to have more than one stream of the same type.

The streams 11, 12, 13, 14 of layer 1 are passed down to lower layers. Among these lower layers, but not necessarily directly below layer 1, is a data distribution layer 2. Such a distribution of data onto a plurality of channels will sometimes also be referred to as multi-link distribution. The function of the data distribution layer 2 is to distribute the stream of data received from above onto channels 31, 32 provided lower than layer 2. The channels may be provided directly below layer 2 or intermediate layers may be present.

A protocol implementation is provided at the second layer 2, which is operable to identify the media streams 12, 13, 14 received from above. As already mentioned, the first layer 1 is not necessarily provided directly above the second layer 2, such that it e.g. possible that the second layer 2 receives a continuous bit stream in which the media streams are multiplexed. On the other hand, it is also possible that the second layer 2 receives the media streams as separate data streams. In any case, the protocol implementation is capable of identifying the individual media streams. This can be done in any desirable or suitable way. For example, if the media streams are passed directly from the first layer 1 to the second layer 2, then a distinction is straight-forward. If the data stream received from above is a continuous and multiplexed stream, then it is e.g. possible to provide a specific identifier in the higher layer frames received by the second layer, such that the second layer can read the identifier in order to identify to which media stream the data in the data frame belongs.

It is important to note that the term "operable" means that the protocol in the second layer 2 does not necessarily perform the corresponding function, but is able to perform the function. As shall be explained in more detail later on, the device and method of the present invention preferably comprise different modes of operation.

Beyond being operable to identify and distinguish the media streams, the protocol implementation at the second layer is also capable of taking into account the quality of service associated with the channels 31, 32, such that the placing of a given media stream into a given channel may be performed on the basis of the type associated with the given media stream and the quality of service associated with the given channel. Again it should be noted that the protocol implementation at layer 2 is operable to perform this operation, i.e. it is capable doing so. Preferably this operation feature is arranged such that it may be turned on or off under the control of the application layer.

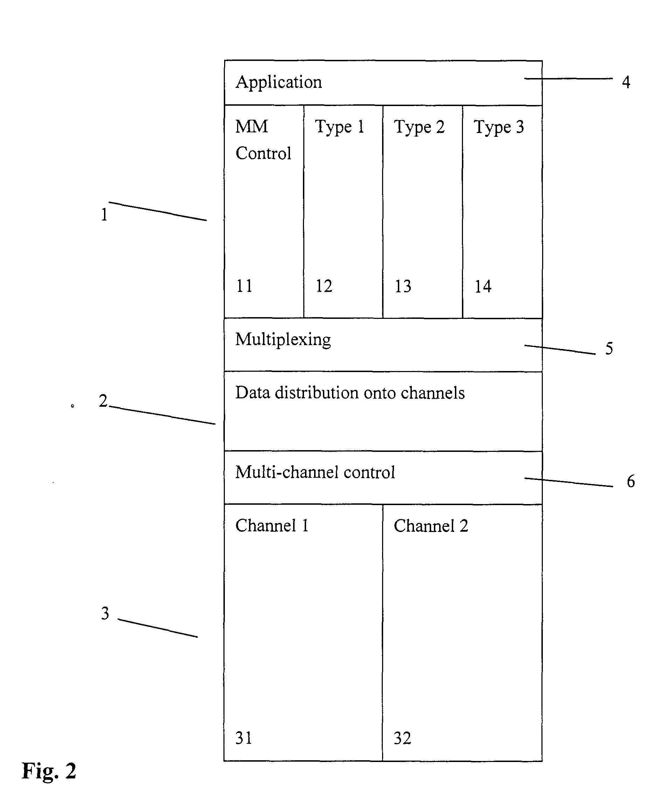

Figure 2 shows an example of a protocol and layer stack in which supplementary layers/protocols have been added with respect to the general example of Figure 1. More specifically, an application layer 4 provides data to the media stream layer 1, and the streams of media 12, 13, 14 and control data 11 are provided to a multiplexing layer 5. Additionally, the multiplexing layer, which encapsulates the data frames or data units received from layer 1 into protocol data units associated with a protocol implemented in layer 5, adds an identifier to each PDU of the protocol implemented in layer 5, such that subsequent layers and protocols are able to identify the specific media stream and/or the type of media being transported, e.g. by parsing the data packets.

Then the distribution layer 2 is arranged such that in specific modes of operation, it can identify the media streams and the type of of each stream coming from higher layers on the basis of the above mentioned identifiers, and is operable to perform the placing of each given media stream into a given channel on the basis of the type associated with the given media stream and the quality of service associated with the given channel. Namely, the channels 31, 32 provided in layer 3 are controlled on the basis of a protocol implemented in layer 6, which is an intermediate layer between layer 2 and layer 3. The multi-channel control layer 6 adjusts and possibly changes the number of channels provided in layer 3, and is also operable to change or adjust the individual settings of each separate channel. The term "quality of service" is used broadly in the context of the present application, and refers to any individual setting of transmission parameters or transmission quality, where separate channels may have separate settings. As an example, a different quality of service can consist in a different transmission reliability (e.g. ARQ or no ARQ), a different guaranteed maximum delay (e.g. real-time or not), or a specific type of coding. Naturally, further different qualities of service are possible, such as specific types of forward error correction etc. The present invention is not restricted to any specific type of quality of service.

Preferably the implementation of the multimedia control protocol 11 will provide the instructions that tell the data distribution layer 2 which streams to place in which channel. The various possibilities of e.g. arranging different modes for distributing data will be described in more detail further on.

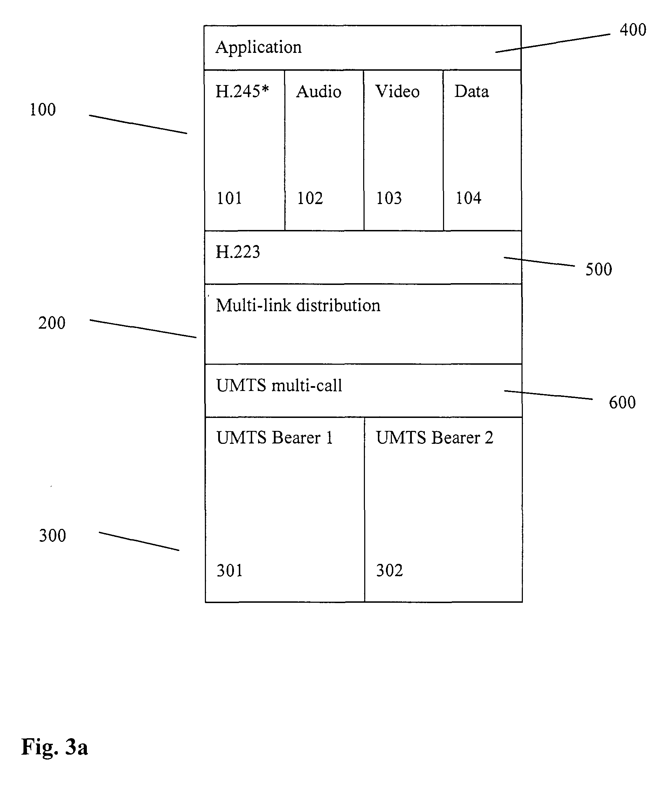

The communication device having the protocol/layer architecture shown in figures 1 and 2 is preferably a mobile terminal in a mobile communication system. Figure 3a shows an example of a protocol stack arrangement for a terminal operating in the Universal Mobile Telephone Standard (UMTS). An application 400 provides data to a layer 100, where the layer 100 comprises a control stream 101 in accordance with a variant of the protocol defined by ITU-T Recommendation H.245 (where said variant will be referred to as H.245*), an audio stream 102, a video stream 103 and a data stream 104. These streams are provided to a layer 500, which implements ITU-T Recommendation H.223 for multiplexing the streams 101, 102, 103 and 104 into a single stream. The layer 200 below layer 500 implements a multi-link distribution protocol, which can e.g. be a variation of the known protocol H.226.

The implementation of H.245* handles one or more of the following tasks:
- allowing the exchange of audiovisual and data capabilities;
- requesting the transmission of a particular audiovisual or data mode;
- managing the streams (logical channels);
- establishing which terminal is the master terminal and which is the slave terminal for the purpose of managing logical channels;
- carrying various control and indication signals;
- controlling the bit rate of individual logical channels and the whole multiplex; and
- measuring the round trip time delay from one terminal to the other and back.

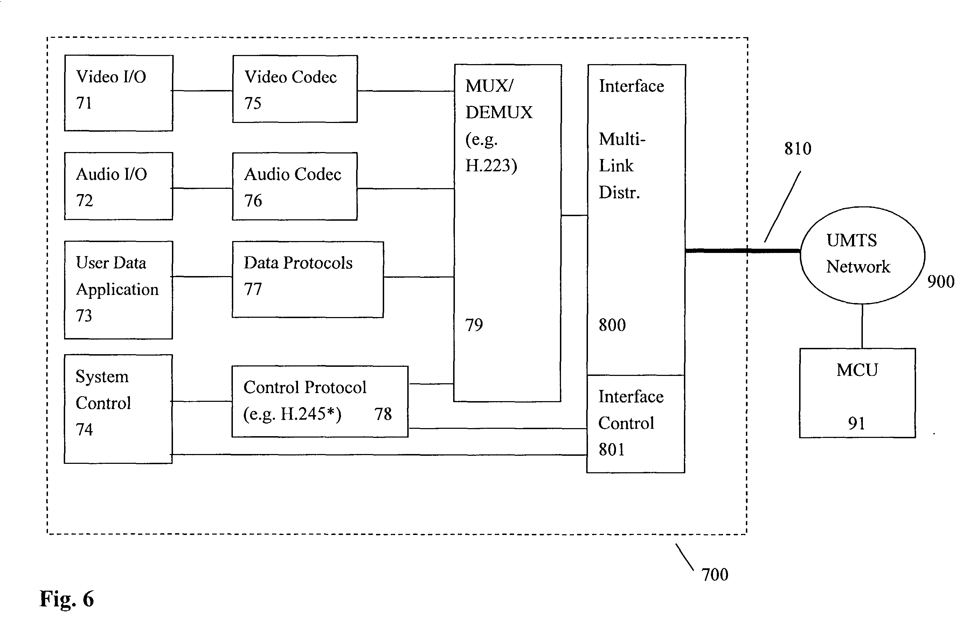

Preferably, the implementation of H.245* comprises all of the features of H.245 according to the ITU-T recommendation. According to the invention, it additionally comprises the feature of being able to transfer information relating to the distribution of specific streams onto specific channels having a certain quality of service, to the multi-link distribution layer 200. In other words, it will provide the layer 200 with information on how to associate the type of a stream with the quality of service in a channel (bearer). Typically, the H.245* implementation will itself receive corresponding information and instructions from the application 400. This transfer of information can occur in-band, i.e. in the (logical) control channel established by H.245*, where the multi-link distributing layer 200 must then be able to read the corresponding information out of the control channel, or can occur separately by way of a dedicated connection between the module providing the H.245* implementation and the module providing the multi-link distributing implementation 200 (also see corresponding description in connection with Fig. 6).

A UMTS multi-call layer 600 is provided, which controls the establishment and maintenance of UMTS bearers 301 and 302. As in the previous cases, the two UMTS bearers (or channels) are only examples, and a larger number is possible.

The multi-link distribution protocol implementation in accordance with the present embodiment preferably comprises all of the features of H.226 described in the introduction of the present application, and more preferably comprises all features described in ITU-T Recommendation H.226, which has been incorporated by reference, and additionally comprises the capability of identifying the media streams 102, 103 and 104 in the data received from layer 500 in the form of H.223 frames, and the capability of performing the placing of a given media stream 102, 103, 104 into a given channel 301, 302 on the basis of the type of media in the given stream and the quality of service associated with the given UMTS bearer. Furthermore, the implementation at layer 200 is capable of receiving control information from the H.245* implementation. As already discussed above, this can be done in many different ways, e.g. by in-band communication, which means that the multi-link distribution implementation is capable of looking into the H.245* channel, or by dedicated communication outside of the hierarchy shown in Fig. 3a.

The identification of the media streams at the layer 200 is preferably done on the basis of an index contained in the H.223 frames. These indicia are contained in a multiplexing table and this table indicates the type of stream. By reading the H.223 index and performing a table look-up, the H.226* layer can determine the stream type.

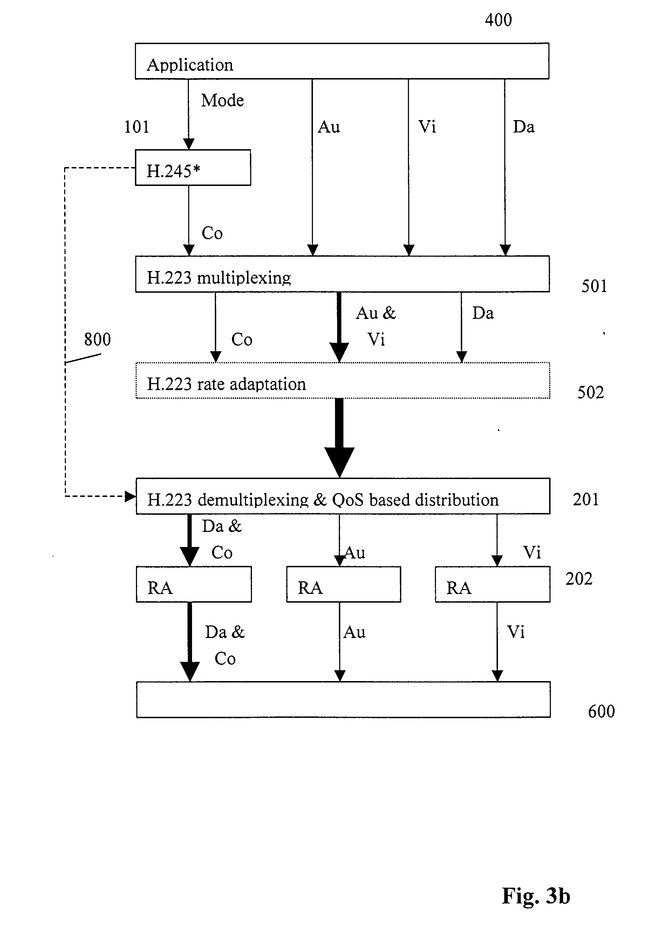

The data flow in the example of Fig. 3a is shown in Fig. 3b, where only a flow in the direction from the application layer to the physical layer is shown. Naturally the system will also be capable of a corresponding return communication from the physical layer to the application layer. Application 400 provides audio (Au), video (Vi), and data (Da) information to the H.223 multiplexing implementation 501. The application 400 also provides information on the mode of operation to the H.245* implementation 101, which in turn sends a control channel (Co) to layer 501. Layer 501 then performs the multiplexing in accordance with H.223, as e.g. explained in the introduction. Fig. 3b shows a second implementation in layer 500, namely a rate adaptation implementation 502. The rate adaptation (in accordance with standard H.223) is only an option, and therefore the corresponding element is only shown as a dashed box. Such an optional H.223 rate adaptation will typically be included for providing the possibility of integrating the present invention into established systems. The arrows between 501 and 502 show an example of how the streams or logical channels can be mixed, and the thick arrow at the bottom of 502 indicates a fully multiplexed bit stream.

The multi-link distributing layer 200 consists of an implementation for demultiplexing the H.223 frames received from above, and performing a distribution of the streams into available (physical) channels or bearers on the basis of the type of the stream and the quality of service of the channel. The control information communicated by the H.245* implementation to the layer 201 is indicated by the dashed arrow 800. Layer 201 outputs streams destined for corresponding UMTS bearers (not shown in Fig. 3b), where the example of Fig.3b shows one channel for data and control (Da&Co), one for audio (Au) and one for video (Vi). Fig. 3b also shows the possibility of performing individual rate adaptation (RA) at a level 202. This is however only an option.

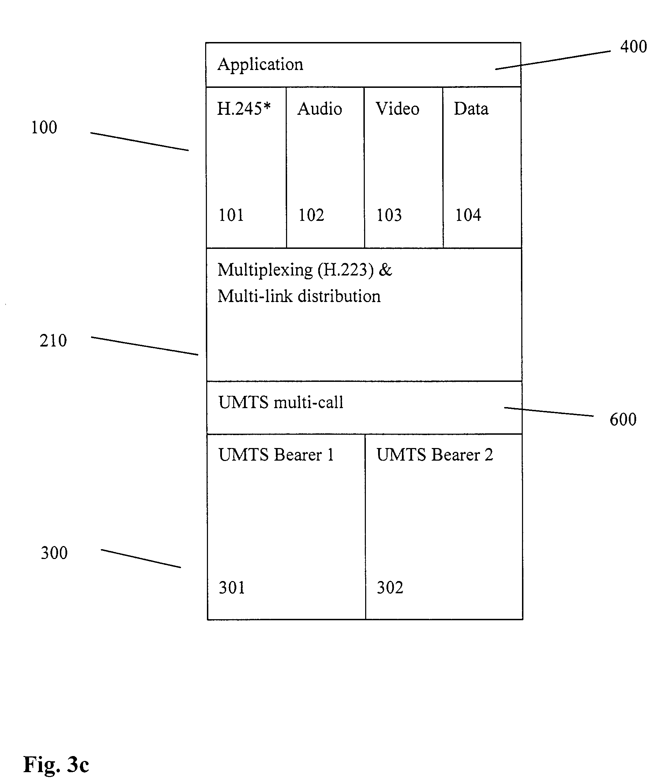

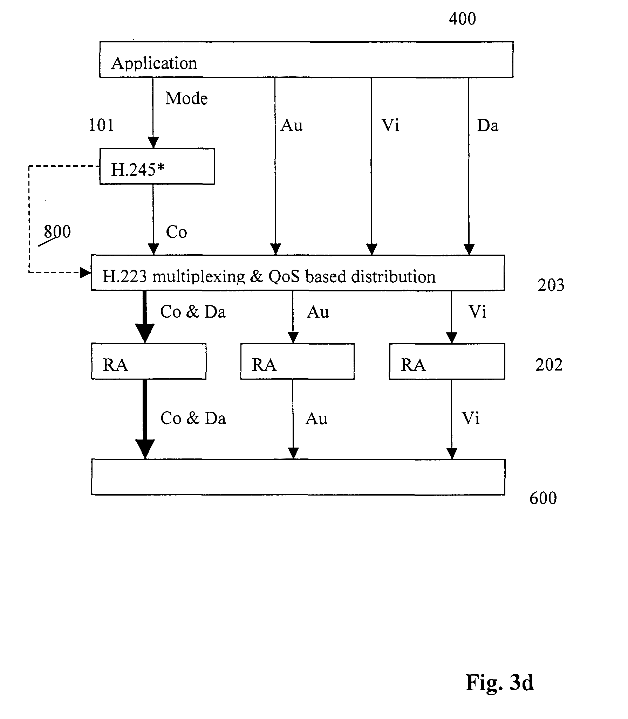

As can be seen, the embodiment of Fig. 3a and 3b is arranged such that the multi-link distribution (200) is provided below the multiplexing function (500). It is however also possible to arrange the multiplexing function and the distribution function together. This will be explained in connection with Figures 3c and 3d.

Fig. 3c shows another embodiment, in which the functions of multiplexing and multi-link distribution are provided in one layer 210. This is reflected by the diagram of fig. 3d, which shows the flow of data in the stack of Fig. 3c. As can be seen in comparison with Fig. 3b, the logical channels Co, Au, Vi and Da are fed to the multiplexing (e.g. in accordance with H.223) and multi-link distributing layer 203. The rate adaptation 202 for individual channels is again shown, although it is only an option. Again, the control connection between H.245* and 203 is indicated by the dashed arrow 800.

In both of the above cases, the H.245* layer contains some logic to decide whether a new channel is to be allocated, and if yes, which channel (i.e. which quality of service). Preferably, the H.245* layer will also provide instructions to the layer 600 for managing the channels, such that the H.245* implementation can indicate if a new (physical) channel is to be opened, which quality of service is to be associated with said new channel, and then also instruct the multi-link distributing layer to place a certain stream or certain streams into the such created new channel. Generally, the H.245* itself will respond to instructions and information from the application layer when performing such control.

According to a preferred embodiment, the protocol implementation at the data distribution layer 2 or 200 is capable of operating in one or more of a plurality of modes (such a mode may e.g. be directly instructed by the application layer, as indicated in Fig. 3b and 3d). According to a first mode, the data stream received from a higher layer is placed into one or more of the channels or bearers irrespective of the type of media. In other words, the layer 2, 200 will then use other criteria for distributing the data, e.g. the criteria known from conventional recommendation H.226. More specifically, with respect to the example of figure 3, the inventive protocol implementation in layer 200 will operate like a conventional H.226 implementation in this mode. Preferably, the mode of the protocol implementation in layer 2, 200 is coupled to a mode of operation in the multi-channel control layer 6, 600. Namely, at the same time that the protocol implementation in layer 200 operates as described above, the multi-call control layer 6, 600 should operate such that additional channels or bearers are only added as is necessary for bandwidth requirements. As a consequence, this mode of operation of the protocol implementations in layers 2, 200 and 6, 600 corresponds to a mode of optimized bandwidth usage.

According to a second mode of operation, the layer 2, 200 should combine two of the data streams into one channel or bearer (or one set of channels or bearers, all having the same quality of service) and place a third stream into one or more channels having a different quality of service. As an example, audio and video streams can be placed into one or more channels or bearers having the same quality of service, whereas the data stream 104 is placed into one or more channels having a different quality of service. Namely, the audio and video streams can be placed into a real-time channel or bearer, whereas the data stream can be placed into an error-free channel or bearer. This second mode is an intermediate mode between the optimization of the band-width and the quality of service. Or, as indicated in Fig. 3b and 3d, the control stream and data stream can be placed into an error-free channel (e.g. with ARQ) and the audio and video are placed into respective real-time bearers.

A third mode of operation comprises placing each media stream 102, 103, 104 into one or more channels or bearers of a dedicated quality of service. In other words, the audio stream 102 is associated with a unique bearer, the video stream 103 is associated with a unique bearer, the data stream 104 is associated with a unique bearer, and the control stream is associated with a unique bearer. For example, the audio stream can be placed into a bearer that has a coding optimized for speech, while the video stream is placed into a simple transparent bearer.

It may be noted that the bearer or channel for the audio stream and the bearer or channel for the video stream may have different qualities of service. Although this can lead to a certain shift between the two streams, the problem of precise synchronization between video and audio (such as lip-synchronization) is handled at the application layer, and can be solved by the suitable use of buffers and similar means. More precisely, it is e.g. possible that the multi-link distribution layer or the control layer (H.245*) determines the shift, and provides corresponding information to the application layer and/or introduce some delay in one or more of the media streams in order to compensate the shift.

Namely, in accordance with this third mode, which is a mode to optimize the quality of service, it can be advantageous to provide different transmission settings for the channel carrying the video stream than for the channel carrying the audio stream, as the audio stream and video stream have their own specific and individual problems and characteristics. This third mode is therefore a mode for optimizing the quality of service.

The three above described modes are only examples, and many more modes can be provided.

Figure 6 shows a block diagram of a UMTS terminal 700 that embodies the present invention. As can be seen, the elements 71 to 79 are the same as in the conventional terminal of Figure 5, such that a repeated description is not necessary. However, terminal 700 comprises a multi-link distributing interface 800 and a corresponding interface control 801. Namely, as can be seen in Figures 3 and 6, the multiplexer/demultiplexer 79 operates in accordance with ITU-T Recommendation H.223, and the interface 800 carries the layer 200 in which the multi-link distributing protocol of the invention is implemented. As a consequence, the link 810 shown in Figure 6 carries the plurality of bearers 301, 302, and the interface 800 performs the placing of media data streams into the bearers as explained above. Furthermore, the UMTS multi-call control (of layer 600 in figure 3) is also handled by the interface 800 under control of the system control 74 via the interface control 801.

The example of Fig. 6 shows a direct connection between the control protocol implementation 78 and the interface control 801. Namely, this represents the possibility of the H.245* implementation to send instructions and information to the multi-link distributing layer. More precisely, the system control 74 (it may be noted that typically the elements 73 and 74 will be provided in one physical unit, namely in a processor, such that there will be interaction between the two) can e.g. instruct the control protocol 78 on the mode of operation. The control protocol 78 can then decide when a new (logical) channel is to be opened and instruct the interface control 801 whether the stream in the new logical channel should be multiplexed with one or more existing stream or a new channel should be opened for the stream in the new logical channel. The interface control 801 can decide on its own how many channels are required for the streams belonging together. The interface control 801 may have to ask the system control 74 whether it is allowed to open a new channel. As an alternative, such information could also be provided to the interface control 801 at the beginning of a session.

In an alternative embodiment (not shown), which corresponds to the arrangement shown in Figures 3c and 3d, the multiplexer/demultiplexer 79 and the interface 800 are unified into a single element that fulfills the tasks of identifying the media streams and multiplexing and placing the streams into the plurality of bearers.

As can be seen, the entire process occurs under control of the system control 74, which sends commands to the control protocol unit 78 and the interface control 801, to thereby control the operations of layers 100, 200, 600 in figure 3 and layers 1, 2 and 6 in figure 2.

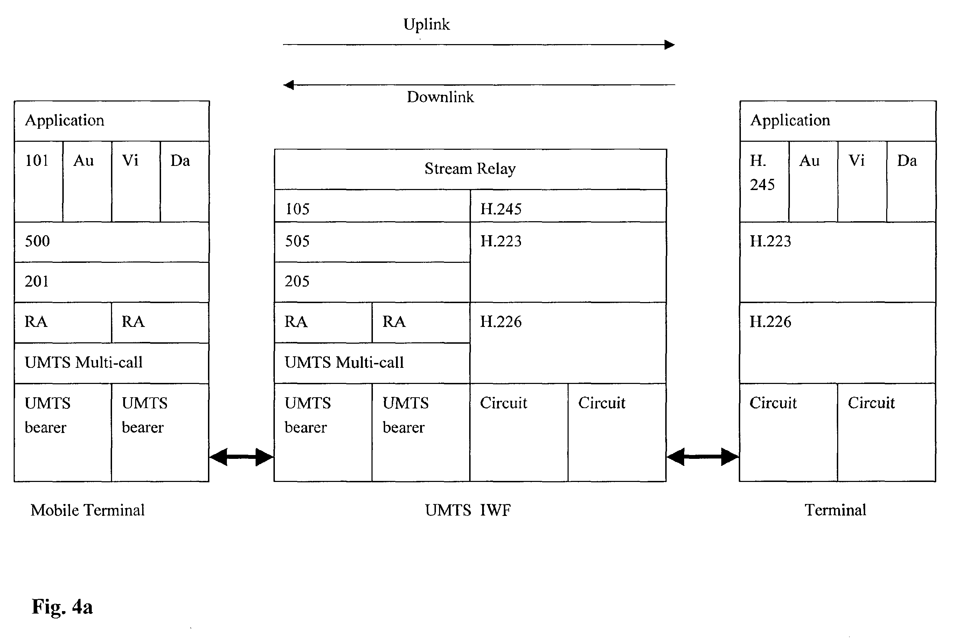

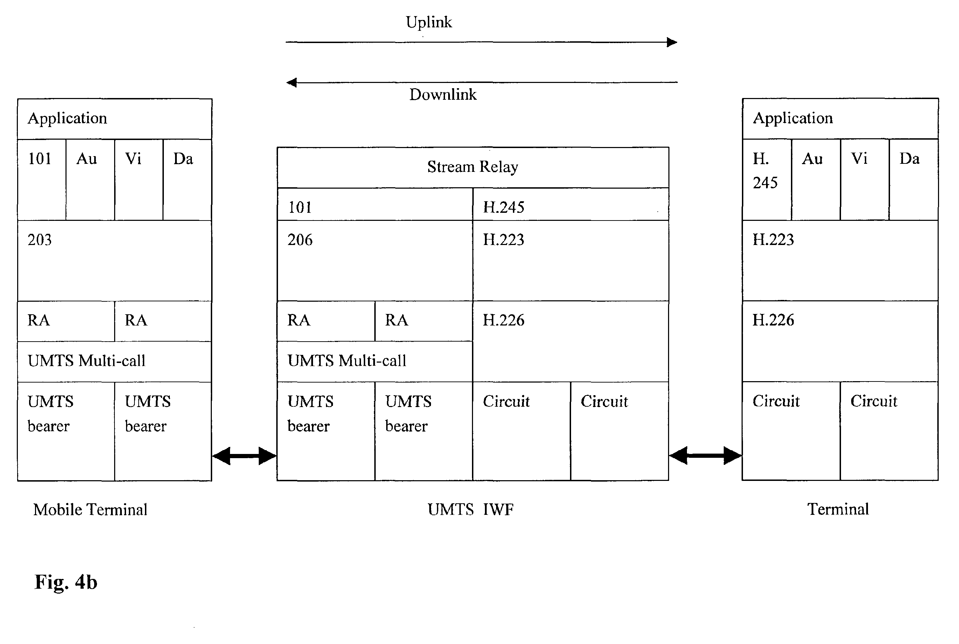

In the above embodiments, the communication device of the present invention was described as being a mobile terminal in a mobile communication system. However, the communication device of the present invention can be any communication device involved in the distribution of data over a plurality of channels, such as an interworking function or interworking device provided between two different communication networks, e.g. between a mobile communication network and another mobile communication network or a fixed network. Examples of this are shown in figures 4a and 4b. Figure 4a corresponds to the arrangement shown in Figures 3a and 3b, and Figure 4b corresponds to the arrangement shown in Figures 3c and 3d.

As can be seen, the mobile terminal on the left hand side of Fig. 4a is arranged as described in connection with figures 3a and 3b, such that a repeated description is not necessary. The right hand side shows a terminal of a different network, and between these two terminals an interworking function (IWF) operates. In the example of figure 4a, the mobile communication is a UMTS network. The other network can be of any desired type, for example an ISDN network or another mobile network.

As can be seen, the UMTS IWF has a relay layer. On the UMTS side, the streams are controlled in accordance with H.245* described above, and the other network is shown as being controlled in accordance with H.245. Then the UMTS side has a layer 505, which constitutes the peer to layer 500 in the mobile terminal. In other words, it fulfills the corresponding functions. The layer 205 is the peer to layer 201 in the terminal. This layer therefore operates precisely like the above described layer 201. It may be added that when one of these multi-link distributing layers 201 or 205 acts as a receiver, it will perform the inverse operation, namely take the information out of the (physical) channels and rebuild the H.223 frames, which are then passed upwards to the respective demultiplexing layer 500 or 505.

In the example of figure 4a, the other network operates in accordance with standard H.226. The other network is furthermore shown as having a multi-link feature, where the channels are indicated as circuits, as this is e.g. the case in an IDSN network, where the circuits could be B-channels.

The unidirectional streams are independent of one another, i.e. the streams in the uplink direction are independent of the streams in the downlink direction (see arrows in figure 4). This means that the operation of the inventive multi-link distributing implementation for the uplink can be performed without any support from either the UMTS IWF or the terminal at the other end of the connection. In other words, the system control 74 (see figure 6) performs its control operation independently of the IWF or other terminal, based on choices made by the user of the terminal and/or on suitable control software for communications operations.

It is generally preferable that the mode of operation of the multi-link distributing protocol implementation be chosen by the mobile terminal. In the case of a downlink connection (from the UMTS IWF to the mobile terminal) this means that the mobile terminal has to signal the preferred mode to the UMTS IWF at an appropriate time. This can e.g. be done during the link setup between the mobile terminal and the UMTS IWF, but can also be handled dynamically in the course of a session. The signaling can be done in any suitable way, for example in a control channel arranged for the exchange of control information between a mobile terminal and the base station, or in the H.245* channel.

Although the present invention has been described on the basis of preferred embodiments, it shall be understood that the invention is by no means restricted to these embodiments, but is defined by the scope of the appended claims. Also, reference numerals in the claims serve the purpose of making claims easier to understand, and do not restrict the scope of the claims.

## Claims

1. Communication device (700) comprising a plurality of protocol implementations layered in a stack, said stack comprising:
a first protocol implementation (11; 101) provided at a first layer (1; 100) that receives data and is arranged to process said received data such that it is associated with one or more of a plurality of media data streams (12, 13, 14; 102, 103, 104), each media stream being associated with a type, and to pass the processed data to a second layer (2; 5; 500) lower than said first layer (1; 100),
a second protocol implementation provided at a second layer (2; 200) lower than said first layer (1; 100), said second protocol implementation being operable to identify the media data streams (12, 13, 14; 102, 103, 104) in the data it receives from a higher layer, and to place said one or more media data streams (12, 13, 14; 102, 103, 104) into one or more channels (31, 32; 301, 302), said channels (31, 32; 301, 302) being provided at a third layer (3; 300) lower than said second layer (2; 200), where any two different channels of said one or more channels (31, 32; 301, 302) are adjustable to be associated with different qualities of service, and where said second protocol implementation is operable to perform the placing of a given media stream into a given channel on the basis of the type associated with said given media stream and the quality of service associated with said given channel.

2. Communication device according to claim 1, **characterized by** being a mobile station (700) in a mobile communication network (900).

3. Communication device according to claim 1 or 2, **characterized in that** said first protocol implementation comprises a multimedia control protocol (H.245*), and receives data from an application layer (4; 400).

4. Communication device according to claim 3, **characterized in that** a third protocol implementation (H.223) is interposed at a fourth layer (5; 500) between said first and second layers, said third protocol implementation (H.223) being arranged to multiplex the media streams (12, 13, 14; 102, 103, 104) received from said first layer (1; 100) into a single stream, and passing said single stream down to said second layer (2; 200).

5. Communication device according to claim 1, **characterized by** being an interworking device between a first communication network and a second communication network.

6. Communication device according to claim 5, **characterized in that** at least said first communication network is a mobile communication network (900).

7. Communication device according to claim 5 or 6, **characterized in that** said first protocol implementation implements a relay function.

8. Communication device according to one of claims 1 to 7, **characterized in that** the type each media data stream (12, 13, 14; 102, 103, 104) is associated with identifies one or more of at least three different kinds of media, and said second protocol implementation is operable to perform said placing of media streams into channels in accordance with two or more of at least three different modes, where
- a first mode comprises placing said data received from a higher layer into one or more of said channels (31, 32; 301, 302) irrespective of the type,
- a second mode comprises placing a media stream of a first type (audio) and a media stream of a second type (video) into one or more channels (31, 32; 301, 302) having the same quality of service, while a media stream of a third type (data) is placed into one or more channels (31, 32; 301, 302) having a different quality of service than the one or more channels for the first and second type, and
- a third mode comprises placing each media stream of a given type into a one or more channels of a dedicated quality of service.

9. Communication device according to claim 8 as dependent on one of claims 5 to 7, **characterized in that** said interworking device receives instructions regarding the mode or modes of operation from a terminal device in said first communication network.

10. Communication device according to one of claims 1 to 9, **characterized in that** said channels (31, 32; 301, 302) are established in accordance with the multi-call function provided by the universal mobile telephone standard (UMTS) and the establishment and maintenance of said channels (12, 13, 14; 102, 103, 104) is controlled by a control layer (6; 600) provided between said second layer (2; 200) and said third layer (3; 300).

11. Method of distributing data over a plurality of channels (31, 32; 301, 302), where any two different channels of said plurality of channels (31, 32; 301, 302) are adjustable to be associated with different qualities of service, and where said data to be distributed comprises a plurality of media data streams (12, 13, 14; 102, 103, 104), each media stream being associated with a type of media, comprising the steps of
- identifying the media data streams (12, 13, 14; 102, 103, 104) in said data to be distributed, and
- placing a given media stream into a given channel on the basis of the type of media in said given media stream and the quality of service associated with said given channel.

12. Method according to claim 11, **characterized in that** each media data stream (12, 13, 14; 102, 103, 104) is associated with one of at least three different types of media, and said step of placing media streams into channels comprises placing a media stream of a first type of media (audio) and a media stream of a second type of media (video) into one or more channels (31, 32; 301, 302) having the same quality of service, while a media stream of a third type of media (data) is placed into one or more channels (31, 32; 301, 302) having a different quality of service than the one or more channels for the first and second type of media.

13. Method according to claim 12, **characterized in that** said first type of media is audio, said second type of media is video, and said third type of media is data.

14. Method according to claim 11, **characterized in that** said step of placing media streams into channels comprises placing each media stream of a given type of media into a one or more channels of a dedicated quality of service.
